# FASCICULE DE BREVET EUROPEEN

(11) **EP 1 154 968 B1**
(45) Date de publication et mention de la délivrance du brevet: **27.11.2002**
(21) Numéro de dépôt: 00910674.1
(22) Date de dépôt: 12.02.2000
(51) Int. Cl.: C04B 28/02, C04B 28/00, B28B 23/00

(54) **PROCEDE DE FABRICATION DE PIERRES RECONSTITUEES**
VERFAHREN ZUM HERSTELLEN VON KUNSTSTEINEN
METHOD FOR PRODUCING ARTIFICIAL STONE

(30) Priorité: 24.02.1999 LU 90354
(43) Date de publication de la demande: 21.11.2001
(73) Titulaire: Carrieres Feidt S.A.R.L., 1135 Luxembourg (LU)
(72) Inventeur: SCHARFE, Guy, L-8216 Mamer (LU); FEIDT, Guy, L-7225 Bereldange (LU); VULCANO, Nelly, F-88290 Saulxures-sur-Moselotte (FR); LECOMTE, André, F-54220 Malzeville (FR); PIROTTE, Michel, B-6717 Metzert (BE); STEICHEN, Claude, L-8612 Pratz (LU)
(74) Mandataire: Kihn, Pierre Emile Joseph
(86) Numéro de dépôt international: EP0001169
(87) Numéro de publication internationale: WO00050356

(56) Documents cités:
- DE-C- 261 454
- US-A- 4 017 321

## Description

### Introduction

La présente invention concerne un procédé de fabrication de pierres reconstituées, notamment pour l'ornementation.

### Etat de la technique

Les pierres de taille font la beauté et la renommée de nombreux édifices. En plus de leur aspect séduisant, les pierres de taille possèdent d'excellentes caractéristiques mécaniques, garantie de pérennité pour les constructions. Les carrières locales, qui fournissent depuis longtemps ces pierres qui donnent leur caractère régional aux bâtiments, églises et places, sont très sollicitées pour la livraison de pièces pour la restauration et l'entretien, ainsi que pour l'insertion de nouvelles constructions dans des sites bâtis.

Malheureusement, les carrières ne sont pas toujours capables de fournir les pièces demandées. Tout d'abord, l'extraction de gros blocs intacts, dans des gisements souvent exsangues, conduit à des coûts élevés et s'accompagne d'une grande quantité de débris. De plus, il arrive que la roche n'ait plus exactement la même coloration que celle qui avait été utilisée dans la construction à restaurer.

Afin de remédier à ces difficultés, des procédés de fabrication de pierres reconstituées ont été développés depuis de nombreuses années. Une pierre reconstituée permet le recyclage des débris et la fabrication de blocs de pierre de taille prédéterminée. De plus, la coloration de la pierre peut être adaptée.

Un procédé de fabrication de pierres reconstituées est présenté dans la demande de brevet WO97/27982. Un matériau granuleux est mélangé, sous vide, à de l'eau, du ciment et des agents fluidifiants. Le rapport de la masse d'eau sur la masse de ciment du mélange se situe entre 0,25 et 0,36. Après un malaxage intime, le mélange est coulé, sous vide, dans un moule, puis désaéré lors d'une étape combinant vide et mouvement vibratoire. Le moule est ensuite transféré vers une section de prise et de durcissement. La pierre reconstituée est démoulée et traverse une dernière étape de durcissement.

Les agents fluidifiants utilisés sont indispensables pour conférer au mélange une fluidité permettant la mise en oeuvre du procédé, notamment le coulage et le désaérage. Ces agents sont bien connus, ce sont des condensats de mélamine ou de naphtalène sulphonée, des lignosulfates de calcium ou de sodium, polymérisés ou non. L'emploi de telles substances est un facteur de risque pour la pérennité de la pierre reconstituée, car leur stabilité dans le temps n'est pas d'une totale garantie. Le produit fabriqué risque donc de se dégrader en vieillissant.

Le document US 4 017 321 décrit un procédé de fabrication de béton isolant électrique dans lequel on réalise un mélange de granulat (tel qu'utilisé conventionnellement dans les bétons), de ciment et d'une quantité de liquide aqueux supérieure à la quantité nécessaire au durcissement du béton et suffisante pour réduire substantiellement la viscosité du mélange. Puis, le mélange est soumis à un vide suffisant pour éliminer les bulles d'air sans provoquer l'ébullition de l'eau à la température du mélange. Une fois la désaération terminée, le béton est coulé dans un moule, et l'eau en excès, c'est-à-dire excédant la quantité stoechiométrique nécessaire à la cure du béton, est évacuée au moyen d'une technique de vide. Enfin, on laisse le béton durcir.

### Objet de l'invention (Problème à résoudre par l'invention)

L'objet de la présente invention est de proposer un autre procédé de fabrication de pierres reconstituées permettant d'obtenir des pierres reconstituées insensibles au vieillissement.

### Description générale de l'invention revendiquée avec ses principaux avantages.

La présente invention est un procédé de fabrication de pierres reconstituées à partir d'un mélange de roche naturelle broyée, d'eau et d'un liant hydraulique, comprenant la succession des étapes suivantes :
a) malaxage de la roche naturelle broyée, du liant hydraulique et de l'eau, l'eau étant ajoutée en excès de manière à obtenir un mélange fluide ;
b) coulage du mélange dans un moule ;
c) désaérage du mélange ;
d) essorage d'au moins une partie de l'eau en excès du mélange ;
e) cure du mélange désaéré et essoré ;
f) démoulage de la pierre reconstituée.

La fabrication de pierres reconstituées par le procédé selon l'invention permet d'obtenir des pierres reconstituées qui ne présentent pas de problèmes lors du vieillissement, puisque le procédé n'emploie pas d'agents fluidifiants qui peuvent mettre en péril la stabilité et la pérennité de celles-ci. Les carriers disposent ainsi d'un procédé de fabrication économique, simple à mettre en oeuvre, n'intégrant que des composants minéraux naturels et permettant d'obtenir des pierres reconstituées aux propriétés physiques et esthétiques comparables à celles de la pierre originelle.

Le procédé permet le recyclage des débris de carrières, produits en abondance lors de l'extraction de blocs. En choisissant un moule adéquat, il est possible de réaliser des pièces de toutes tailles et de toutes formes, sur des épaisseurs pouvant atteindre 60 cm et plus. Par ailleurs, la reproductibilité du procédé permet de fabriquer des pierres reconstituées identiques. Il sera apprécié que le présent procédé utilise de l'eau en excès dans ses premières étapes, afin d'obtenir un mélange fluide. De fait, le mélange possède une bonne maniabilité, sans emploi d'agents fluidifiants, ce qui présente un avantage pour le coulage. L'étape de désaérage est facilitée en raison de la fluidité du mélange, favorisant l'ascension des bulles d'air emprisonnées pendant le malaxage et le coulage. On remarquera que l'eau ajoutée en excès est éliminée, au moins en partie, lors de l'étape d'essorage.

Avant l'étape a), la granulométrie de la roche broyée peut être ajustée. Ceci permet de rapprocher la granulométrie de la roche broyée de la granulométrie de la roche naturelle. On peut alors calculer la fraction de vide et le dosage des constituants.

Le rapport de la masse d'eau sur la masse de ciment est au moins égal à 0.4, est de préférence supérieur à 0,55, et de manière la plus préférée supérieur à 0.7. Le mélange possède ainsi une bonne fluidité ou maniabilité, facilitant la mise en oeuvre.

De préférence, l'étape c) est réalisée sous un vide industriel qui n'est pas inférieur à 20 mm de Hg, accompagné d'un mouvement vibratoire. L'air emprisonné pendant les étapes de malaxage et de coulage est évacué.

L'essorage de l'étape d) est avantageusement effectué par tapis filtrant. Cette opération permet l'extraction d'au moins une partie de l'eau qui a servi à fabriquer le mélange, et qui doit être évacuée pour garantir une bonne qualité de la pierre reconstituée.

Préférentiellement, l'étape e) se déroule dans un local à hygrométrie et température contrôlées. Ces conditions permettent une bonne prise hydraulique et limitent les phénomènes de retrait et de fissuration.

On prévoit avantageusement une étape de maturation après le démoulage, étape f). Les pierre reconstituées sont préservées de la dessiccation et peuvent ainsi atteindre un degré de durcissement avancé, pendant cette maturation finale.

Des agents de couleur inertes peuvent être ajoutés dans l'étape (a), tels que des pigments naturels ou du sable, afin de moduler la couleur de la pierre reconstituée. Les carriers peuvent donc fabriquer une pierre qui a sensiblement la même couleur que les pierres déjà présentes dans l'édifice, lors d'une restauration par exemple.

De préférence, on utilise un liant hydraulique dont la couleur est adaptée à la couleur de la pierre à reconstituer, de manière à ne pas modifier la couleur de la roche, surtout dans le cas d'une roche claire.

Des agents de texture inertes peuvent être ajoutés dans l'étape (b). On peut ainsi corriger la texture de la pierre reconstituée en fonction de la roche originelle, et ces agents inertes, par nature, n'affectent pas la stabilité du matériau.

On peut avantageusement effectuer un traitement de surface entre les étapes e) et f), c'est à dire juste après l'essorage. La surface qui a reçu le tapis filtrant, et qui en porte l'empreinte, peut être remaniée par un surfaçage manuel ou mécanique.

La pierre reconstituée peut être ouvrée et traitée comme une pierre naturelle après maturation finale. On peut alors lui donner la taille souhaitée, ou encore lui faire subir différents traitements de surface pour retrouver l'aspect de la roche originelle.

### Description détaillée d'au moins un mode de réalisation

D'autres particularités et caractéristiques de l'invention ressortiront de la description détaillée d'un mode de réalisation avantageux présenté ci-dessous.

Avant d'aborder le procédé proprement dit, il est intéressant de se rappeler le principe de la fabrication de pierres reconstituées.

Lorsqu'on fabrique des pierre reconstituées à partir de pierre naturelle broyée, d'un liant hydraulique et d'eau, il est impératif de remplir les vides qui sont créés ou qui demeurent entre les grains du mélange. En fait, plus le remplissage est dense, plus les propriétés et l'apparence du produit final se rapprochent de la pierre naturelle.

La quantité de vide, et donc la fraction de vide à combler entre les grains de pierre naturelle, dépend de la taille de ces grains. Le mélange, à base de ciment, d'eau et de pierre broyée, doit contenir une quantité d'eau suffisante pour que les réactions de prise et de durcissement puissent avoir lieu. Toutefois, cette quantité d'eau n'est pas suffisante pour conférer au mélange une bonne maniabilité ou fluidité. Mais l'excès d'eau nuit à la compacité de la pierre reconstituée en augmentant sa porosité, et altère ses propriétés mécaniques.

Il est possible d'obtenir un mélange fluide en utilisant des agents fluidifiants. Ces derniers sont néanmoins à éviter car ce sont des produits organiques qui peuvent se dégrader quand la pierre vieillit, altérant la qualité de la pierre reconstituée ; de plus, en défloculant les particules fines des mélanges frais, il confèrent parfois aux pierres durcies une esthétique différente de celle de la pierres naturelle. Dans le présent procédé, on obtient un mélange fluide en ajoutant de l'eau en excès ; mais cette eau est évacuée du mélange frais, une fois le mélange coulé et désaéré.

Les étapes du procédé, qui peut s'appliquer à la reconstitution toute pierre naturelle de nature sédimentaire ou non, sont décrites dans leur ordre chronologique, dans un mode préféré de réalisation, pour la fabrication de pierres reconstituées destinées principalement à l'ornementation. La roche naturelle utilisée est une roche sédimentaire : le grès du Luxembourg, encore appelé pierre d'Ernzen.

### 1. matières premières

Des matières premières de qualité sont essentielles pour obtenir un bon résultat. Il sera apprécié que la pierre reconstituée, selon le présent procédé, est fabriquée uniquement à partir de pierre naturelle, d'un liant hydraulique, d'eau, et éventuellement d'agents inertes correcteurs de texture ou de couleur.

Pour ce qui est de la roche originelle, elle provient directement de la carrière. Les débris et chutes d'abattage sont broyés ou concassés de façon à ajuster leur granulométrie en fonction de la granulométrie de la roche naturelle à reconstituer. On obtient alors un sable, plus ou moins grossier, dont la granulométrie peut encore être modifiée par concassage ou criblage pour améliorer la perméabilité et la fluidité des mélanges au moment de leur traitement. La courbe 1 présente une courbe de répartition de la granulométrie du grès du Luxembourg originel, et celle du sable utilisé pour la fabrication de pierres reconstituées. On remarquera que la taille des plus gros grains, environ 2 mm, du sable utilisé pour la reconstitution est la même que celle des plus gros grains du grès originel, des grains siliceux cimentés par 28% de carbonate de calcium.

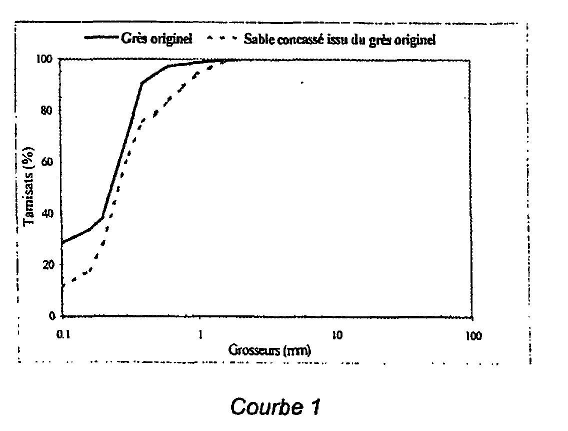

De préférence, le liant ne doit pas avoir d'incidence sur la coloration de la pierre à reconstituer, qui est souvent assez claire. Les ciments CEM III, IV ou V, sont à éviter, de par la variété et la nature de leurs constituants ; on leur préfère un liant blanc. Pour la reconstitution de grès du Luxembourg, un liant de type CEM I 42.5 blanc a été choisi. Toutefois, il faut préciser que la compatibilité chimique de ce type de liant avec la matière minérale a été vérifiée au préalable. De même, pour les pièces massives, le choix du liant est guidé par la recherche d'une faible teneur en C3A (aluminate tricalcique) afin de limiter le retrait thermique.

L'eau est le troisième constituant principal, sa qualité doit être surveillée. Pour le gâchage, la température de l'eau doit être maintenue supérieure à 15°C. De plus, elle ne doit pas apporter d'impuretés susceptibles d'altérer les propriétés physiques, mécaniques et de durabilité. L'eau potable du réseau public convient généralement.

Enfin, la couleur et/ou la texture de la pierre reconstituée peuvent être modifiées ou ajustées par l'ajout de sable ou de pigments naturels inertes. Le choix et le dosage de ces derniers se fait préférentiellement par colorimétrie différentielle. En ce qui concerne les agents de texture (non employés pour le grès du Luxembourg), il s'agit de sable correcteur d'autre origine que la pierre à reconstituer, p.ex. du sable alluvionnaire de quartz ayant une teinte similaire à celle de la pierre à reconstituer ; sorte de géotextile placé dans le moule avant coulage.

### 2. dosages

Les proportions des différents composants sont judicieusement choisies, de façon à reproduire le plus exactement possible les caractéristiques de la pierre originelle.

Comme on l'a déjà mentionné, le liant, avec ses éléments correcteurs, doit être présent en quantité suffisante pour combler les interstices (espaces vides) entre les grains de sable sec, de manière à atteindre la porosité de la pierre originelle.

Une faible proportion de sable légèrement rose, correcteur de couleur inerte, est utilisée.

Le dosage du liant, CEM I 42.5, a été calculé en fonction des données suivantes :
- porosité volumique de l'empilement sec de la matière minérale broyée, légèrement compactée : 30.5% ;
- porosité volumique de la pierre naturelle : 16% ;
- différence de porosité :14.5%.

En conséquence, on utilise environ 450 kg de CEM I 42.5 pour 1 m³ de grès reconstitué. On observe par ailleurs, compte tenu des masses volumiques respectives, que cette quantité de liant représente environ 19% de la pierre reconstituée. Ce pourcentage, ajouté au pourcentage des plus petits granules de la matière minérale broyée équivaut alors approximativement à la teneur en ciment calcitique du grès originel (environ 30%, comme indiqué sur la courbe 1).

Le dosage en eau dépend de la consistance que l'on souhaite conférer au mélange. On fabrique ici un mélange fluide en ajoutant de l'eau en excès, pour faciliter sa mise en oeuvre et sa désaération. Le terme « en excès » signifie qu'il faut nettement plus d'eau que la quantité juste nécessaire à l'hydratation du ciment, mais pas plus que nécessaire à l'obtention d'une fluidité assurant le malaxage et le désaérage. On obtient ainsi un mélange d'excellente maniabilité, sans utilisation d'agents fluidifiants. Dans le cas présent, on utilise une quantité d'eau permettant d'obtenir un rapport de la masse d'eau sur la masse de ciment, noté E/C, supérieur à 0,70. Pour mémoire, le rapport E/C minimal pour l'hydratation du ciment est de l'ordre de 0,33.

### 3. Malaxage

L'étape de malaxage consiste à mélanger ensemble tous les composants de façon à obtenir une pâte homogène, gage de la qualité esthétique finale du produit. Le calcul de dosage est effectué en prévision de l'étape de malaxage ; si le mélange est trop ferme, même les malaxeurs les plus puissants ne pourront pas réaliser un mélange homogène. C'est également une raison de l'utilisation d'un mélange fluide. La maniabilité de ce mélange (E/C=0,70) est mesurée par le temps d'écoulement au cône de Marsh de 1 litre à travers un ajustage de 10 mm, ce temps est d'environ 50 s.

Dans l'étape de malaxage, on déverse dans une cuve les proportions calculées de matière minérale, de liant, d'eau, et de correcteur de couleur. Un malaxage de 3 minutes dans une cuve permet d'obtenir une bonne homogénéisation du mélange.

### 4. Coulage

Le mélange fluide obtenu à l'étape de malaxage est ensuite coulé dans un moule. Ce dernier peut être de forme parallèlépipèdique régulière ou non. Les dimensions des moules sont adaptées à l'utilisation future de la pierre reconstituée. Les moules, ou coffrages, sont généralement en acier, conçus pour de nombreuses utilisations et des démoulages faciles. Ils peuvent également être en bois (contre plaqué de coffrage) ou en matériaux plastiques. Les coffrages doivent être rigides et sont avantageusement équipés d'attaches pour la manutention et le levage.

On notera que si le volume du coffrage à remplir dépasse la capacité du malaxeur, le malaxage et le coulage sont effectués en plusieurs fois, dans l'intervalle de temps le plus bref.

### 5. Désaérage

Lors du malaxage et du coulage, des inclusions d'air se forment au sein du mélange. Il est nécessaire d'évacuer ces bulles d'air, tant que le mélange est frais, afin que le matériau puisse présenter les caractéristiques de la roche originelle. On considère que le seuil de perception, à l'oeil nu, des plus petites bulles d'air est de 0,3 mm, pour des roches claires. On remarquera toutefois que le désaérage ne modifie pratiquement pas la porosité finale du matériau qui est fonction de la granulométrie de la matière minérale, des proportions respectives des constituants, et de la teneur en eau.

Le désaérage est basé sur le principe d'Archimède. Au sein du mélange dans le moule , chaque bulle subit une poussée de bas en haut, fonction de son volume et de la densité du mélange. A cette force, le mélange oppose une résistance fonction notamment de la viscosité plastique et du seuil de cisaillement. Pour évacuer les bulles, on conjugue deux actions :
- on soumet le mélange à un vide industriel, provoquant l'augmentation de volume des bulles. Ces dernières subissent alors une poussée d'Archimède plus intense, favorisant leur ascension vers la surface.
- on applique un mouvement vibratoire, ce qui permet d'abaisser le seuil de cisaillement du mélange, et donc de diminuer la résistance qui s'oppose à l'ascension des bulles.

La combinaison de ces deux effets doit être réglée en intensité, afin d'évacuer jusqu'aux bulles les plus fines. La durée du désaérage dépend de l'épaisseur du mélange dans le moule, c'est à dire de la longueur de parcour des bulles les plus profondes. On retrouve ici un autres aspect de l'intérêt du mélange fluide, dont le faible seuil de cisaillement favorise l'ascension des bulles d'air.

Pour le grès du Luxembourg, on utilise préférentiellement une aire de désaérage constituée d'une plaque métallique rigide montée sur amortisseurs. Elle est équipée de deux vibrateurs à fréquence variable fixés symétriquement. La puissance, la force et la fréquence de ces vibrateurs sont choisies en fonction de la taille de l'installation. Sur cette aire est soudé un négatif d'étanchéité destiné à recevoir une cloche de désaérage en acier munie d'un joint. Cette cloche est reliée à une pompe à vide adaptée au volume de la cloche. Le moule rempli du mélange est donc disposé sur l'aire de désaérage puis recouvert de la cloche. Un traitement de désaérage n'excède généralement pas 20 minutes.

On utilise pour la fabrication de grès du Luxembourg reconstitués des moules de 1,20 m x 0,80 m, avec des épaisseurs variant entre 0,10 et 0,60 m. Un vide de l'ordre de 30 à 60 mm Hg est appliqué pendant 15 à 20 minutes. Une vibration modérée d'une fréquence de 60 à 100 Hz et d'une amplitude de 5 mm est appliquée simultanément.

### 6. Essorage

L'excédent d'eau qui a permis le mélange intime des constituants, puis l'élimination de l'air piégé, doit maintenant être évacué.

Dans cette étape du procédé, appelée essorage, le volume solide de la pierre augmente et les particules minérales se rapprochent les unes des autres jusqu'à atteindre l'empilement estimé lors du dosage, proche de celui de la pierre naturelle.

La porosité finale de la pierre reconstituée et ses propriétés sont grandement conditionnées par la qualité de ce traitement qui fixe le rapport E/C final.

On pratique ici l'essorage par tapis filtrant. Le tapis filtrant est constitué de deux membranes superposées et solidaires qui définissent ses deux faces. La membrane inférieure, alvéolée est en contact direct avec la surface libre du mélange désaéré. La membrane supérieure s'étend sur 5 cm au delà de la périphérie de la membrane inférieure, afin de réaliser un joint périphérique d'étanchéité entre le mélange et le tapis. La membrane supérieure est également connectée à une pompe à vide. Lorsque cette dernière est activée, la dépression créée sous le tapis permet de drainer des filets d'eau excédentaire vers la surface. L'eau est filtrée par les alvéoles de la membrane inférieure et est évacuée. On remarquera que les bords recouverts par la membrane supérieure servent de joint et ne sont pas totalement essorés. La profondeur d'action dépend directement de la perméabilité du milieu, elle même conditionnée par la granulométrie de la roche broyée et la teneur en liant. Une modification trop rapide de la perméabilité de la couche supérieure (par surabondance de fines) risque aussi de freiner l'ascension de l'eau sous-jacente. De plus, les fines particules, entraînées par un flux hydraulique trop intense vers la sous surface du tapis peuvent diminuer la perméabilité de ce dernier et créer une ségrégation au sein du matériau, au niveau de la couche supérieure. L'essorage mène au blocage de l'empilement minéral, il raffermit la préparation et permet une résistance précoce et un démoulage rapide.

Une autre méthode avantageuse d'essorage consiste à utiliser un tapis filtrant fixé sur une plaque rigide munie d'un joint d'étanchéité périphérique, prenant appui sue les joues du coffrage, ce qui permet d'essorer l'intégralité du mélange. Pour les pièces épaisses, un second tapis filtrant, adapté du procédé et protégé par un filtre papier ou synthétique perdu, peut aussi être placé au fond du moule.

On notera que la plus grande partie de l'eau excédentaire est extraite après environ 15 minutes de traitement. Une prolongation de l'essorage n'améliore pas beaucoup le rendement, comme illustré courbe 2 (un exemple de pierres reconstituées de 15 cm d'épaisseur). Par ailleurs, une durée d'essorage trop longue risque d'enlever trop d'eau au mélange, plus que l'eau excédentaire. Si la quantité d'eau du mélange n'est pas suffisante pour la prise et le durcissement, il subsiste des phases anhydres au sein du matériau pouvant mettre en péril la stabilité de la pierre reconstituée.

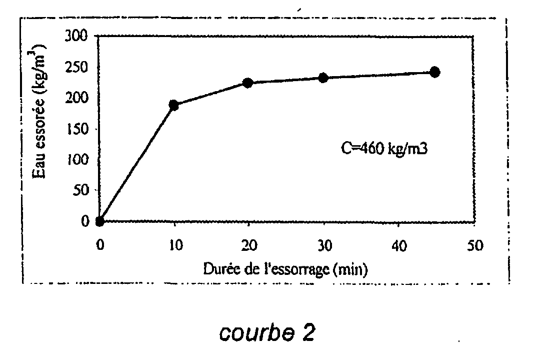

En somme, l'essorage doit être adapté à la composition de la pierre, l'intensité du vide et la durée doivent être soigneusement réglées. On remarque également qu'un essorage poussé n'est pas toujours nécessaire.

### 7. Traitement de surface

Lorsque l'essorage est terminé, la surface du mélange porte l'empreinte rugueuse du tapis filtrant. Si la pierre reconstituée est destinée à être scellée comme pierre de parement, elle pourra être utilisée telle quelle : on veillera à la fixer par sa face rugueuse.

Pour d'autres utilisations, la surface rugueuse subit un surfaçage manuel ou mécanique, juste après l'essorage.

### 8. Cure et démoulage

A ce stade du procédé, les mélanges présentent un rapport E/C généralement faible. Il est important de préserver leur humidité (cure) pour assurer une prise hydraulique satisfaisante et limiter les phénomènes de retrait et de fissuration. Les coffrages sont donc stockés dans des lieux à hygrométrie et température contrôlées. De préférence, les pierres reconstituées sont démoulées lorsque le matériau est devenu auto-portant, ce qui peut demander entre 16 et 36 heures.

Après démoulage, deuxième période de cure combinée à une maturation. Pendant plusieurs jours, les pierres reconstituées sont encore préservée de la dessiccation, pour atteindre un durcissement avancé.

### 9. Ouvrage de la pierre reconstituée durcie

Une fois la pierre reconstituée durcie, elle est équarrie, afin d'éliminer notamment les zones périphériques qui ont été plus modestement essorées. La pierre reconstituées peut être ensuite ouvrée comme de la pierre naturelle. En général, le travail de la pierre peut commencer après 7 jours de maturation. La résistance finale prévue pour la pierre n'est atteinte qu'au bout d'un mois.

On notera que la pierre reconstituée à forte teneur en liant peut s'avérer plus difficile à ouvrer que la roche originelle, requérant l'emploi d'outils plus résistants. Un traitement de surface spécifique, comme un sablage, permet de retrouver la texture ou le touché de la roche originelle, le cas échéant.

Pour le grès du Luxembourg reconstitué, on utilise un traitement à l'acide chlorhydrique, particulièrement pour les mélanges à forte teneur en ciment. Cela permet de dissoudre en surface le carbonate qui enrobe les grains de quartz, ils sont donc mis en relief, comme pour la pierre naturelle.

## Revendications

1. Procédé de fabrication de pierres reconstituées à partir d'un mélange de roche naturelle broyée, d'eau et d'un liant hydraulique, comprenant la succession des étapes suivantes :
a) malaxage de la roche naturelle broyée, du liant hydraulique et de l'eau, l'eau étant ajoutée en excès de manière à obtenir un mélange fluide ;
b) coulage du mélange dans un moule ;
c) désaérage du mélange ;
d) essorage d'au moins une partie de l'eau en excès du mélange ;
e) cure du mélange désaéré et essoré ;
f) démoulage de la pierre reconstituée.

2. Procédé selon la revendication 1, **caractérisé en ce qu'**avant l'étape (a) on ajuste la granulométrie de la roche broyée, on calcule la fraction de vide d'un empilement compact de grains de roche broyée, et on calcule le dosage des constituants en fonction de la fraction de vide ;

3. Procédé selon la revendication 1 ou 2, **caractérisé par** un rapport de la masse d'eau sur la masse de liant hydraulique au moins égal à 0,55, et de préférence supérieur à 0,7.

4. Procédé selon l'une quelconque des revendications précédentes, **caractérisé en ce que** l'étape (c) se fait sous un vide qui n'est pas inférieur à 10 mm de Hg, avec application simultanée d'un mouvement vibratoire.

5. Procédé selon l'une quelconque des revendications précédentes, **caractérisé en ce que** l'essorage de l'étape (d) est effectué par tapis filtrant.

6. Procédé selon l'une quelconque des revendications 1 à 4, **caractérisé en ce que** l'essorage de l'étape (d) se fait par deux tapis filtrants disposés sur deux faces opposées du mélange dans le moule.

7. Procédé selon l'une quelconque des revendications précédentes, **caractérisé en ce que** l'hygrométrie et la température sont contrôlés pendant l'étape (e).

8. Procédé selon l'une quelconque des revendications précédentes, **caractérisé par** une étape de maturation finale suivant l'étape (f).

9. Procédé selon la revendication 8, **caractérisé en ce que** la pierre reconstituées est préservée de la dessiccation pendant la maturation finale.

10. Procédé selon la revendication 8, **caractérisé en ce que** la pierre reconstituée est ouvrée et traitée après maturation finale.

11. Procédé selon l'une quelconque des revendications précédentes, **caractérisé par** un ajout d'agents de couleur inertes dans l'étape (a).

12. Procédé selon l'une quelconque des revendications précédentes, **caractérisé en ce que** le liant hydraulique possède une couleur adaptée à la couleur de la pierre à reconstituer.

13. Procédé selon l'une quelconque des revendications précédentes, **caractérisé par** un ajout d'agents de texture inertes dans l'étape (a).

14. , Procédé selon l'une quelconque des revendications précédentes, **caractérisé par** une étape de traitement de surface entre les étapes (e) et (f).

## Claims

1. A method for producing reconstituted stones from a mixture of crushed natural rock, water and a hydraulic binder comprising the succession of the following steps:
a) kneading of the crushed natural rock, the hydraulic binder and water, whereby water is added in excess in order to obtain a fluid mixture;
b) casting of the mixture into a mold;
c) de-airing of the mixture;
d) expression of at least a portion of the water in excess from the mixture;
e) curing of the de-aired and expressed mixture;
f) removal of the reconstituted stone from the mold.

2. The method according to claim 1, **characterized in that** before step (a), the grain size of the crushed stone is adjusted, the void fraction of a compact stack of crushed rock grains is calculated and the dosage of the constituents is calculated according to the void fraction.

3. The method according to claim 1 or 2, **characterized by** a ratio of the water mass to the hydraulic binder mass at least equal to 0.55, and preferably larger than 0.7.

4. The method according to any of the preceding claims, **characterized in that** step (c) is performed in a vacuum which is not less than 10 mm Hg, with simultaneous application of a vibratory motion.

5. The method according to any of the preceding claims, **characterized in that** the expression of step (d) is carried out via a filter bed.

6. The method according to any of the claims 1 to 4, **characterized in that** the expression of step (d) is performed by two filtering beds positioned on two opposite faces of the mixture in the mold.

7. The method according to any of the preceding claims, **characterized in that** hygrometry and temperature are controlled during step (e).

8. The method according to any of the preceding claims, **characterized by** a final maturation step following step (f).

9. The method according to claim 8, **characterized in that** the reconstituted stone is preserved from desiccation during the final maturation.

10. The method according to claim 8, **characterized in that** the reconstituted stone is worked and treated before final maturation.

11. The method according to any of the preceding claims, **characterized by** addition of inert coloring agents in step (a).

12. The method according to any of the preceding claims, **characterized in that** the hydraulic binder has a color adapted to the color of the stone to be reconstituted.

13. The method according to any of the preceding claims, **characterized by** addition of inert texture agents in step (a).

14. The method according to any of the preceding claims, **characterized by** a surface treatment step between steps (e) and (f).

## Patentansprüche

1. Verfahren zum Herstellen von Kunststeinen aus einem Gemisch aus zerkleinertem Naturgestein, Wasser und einem hydraulischen Bindemittel, in dem folgende Schritte in der angegebenen Reihenfolge durchgeführt werden:
a) das zerkleinerte Naturgestein, das hydraulische Bindemittel und das Wasser werden gemischt, wobei so viel überschüssiges Wasser beigemengt wird, dass das Gemisch flüssig wird;
b) das Gemisch wird in eine Form gegossen;
c) das Gemisch wird entlüftet;
d) das im Gemisch überschüssige Wasser wird zumindest teilweise aus dem Gemisch ausgedrückt;
e) das entlüftete und aisgedrückte Gemisch nachbehandelt;
f) der Kunststein wird aus der Form gelöst.

2. Verfahren nach Anspruch 1, **dadurch gekennzeichnet, dass** vor dem Schritt (a) die Granulometrie des zerkleinerten Gesteins eingestellt, der Hohlraumanteil einer dichten Packung von Körnern des zerkleinerten Gesteins berechnet und die Dosierung der Bestandteile in Abhängigkeit des Hohlraumanteils berechnet wird.

3. Verfahren nach Anspruch 1 oder 2, **dadurch gekennzeichnet, dass** der Verhältniswert von Wassermasse zu Masse des hydraulischen Bindemittels mindestens 0,55 beträgt und vorzugsweise höher ist als 0,7.

4. Verfahren nach einem beliebigen der vorherigen Ansprüche, **dadurch gekennzeichnet, dass** Schritt (c) unter einem Vakuum von nicht weniger als 10 mm Hg erfolgt, wobei gleichzeitig eine Vibrationsbewegung zum Tragen kommt.

5. Verfahren nach einem beliebigen der vorherigen Ansprüche, **dadurch gekennzeichnet, dass** das Ausdrücken in Schritt (d) mit Hilfe einer Filtermatte erfolgt.

6. Verfahren nach einem beliebigen der vorherigen Ansprüche 1 bis 4, **dadurch gekennzeichnet, dass** das Ausdrücken in Schritt (d) mit Hilfe zweier Filtermatten erfolgt, die auf zwei entgegengesetzten Seiten des in der Form befindlichen Gemischs liegen.

7. Verfahren nach einem beliebigen der vorherigen Ansprüche, **dadurch gekennzeichnet, dass** während Schritt (e) die Luftfeuchtigkeits- und Temperaturmessung kontrolliert erfolgen.

8. Verfahren nach einem beliebigen der vorherigen Ansprüche, **dadurch gekennzeichnet, dass** auf Schritt (f) eine abschließende Aushärtungsphase folgt.

9. Verfahren nach Anspruch 8, **dadurch gekennzeichnet, dass** während der abschließenden Aushärtungsphase der Kunststein vor der Austrocknung geschützt wird.

10. Verfahren nach Anspruch 8, **dadurch gekennzeichnet, dass** nach der abschließenden Aushärtungsphase der Kunststein bearbeitet und behandelt wird.

11. Verfahren nach einem beliebigen der vorherigen Ansprüche, **dadurch gekennzeichnet, dass** in Schritt (a) inerte Färbungsmittel beigemengt werden.

12. Verfahren nach einem beliebigen der vorherigen Ansprüche, **dadurch gekennzeichnet, dass** das hydraulische Bindemittel farblich auf die gewünschte Farbe des herzustellenden Kunststeins abgestimmt ist.

13. Verfahren nach einem beliebigen der vorherigen Ansprüche, **dadurch gekennzeichnet, dass** in Schritt (a) inerte Texturmittel beigemengt werden.

14. Verfahren nach einem beliebigen der vorherigen Ansprüche, **dadurch gekennzeichnet, dass** zwischen Schritt (e) und Schritt (f) ein Oberflächenbehandlungsvorgang erfolgt.
